# EUROPEAN PATENT SPECIFICATION

(11) **EP 2 066 734 B1**
(45) Date of publication and mention of the grant of the patent: **24.10.2012**
(21) Application number: 07807105.7
(22) Date of filing: 05.09.2007
(51) Int. Cl.: C08L 83/14, C08G 77/50

(54) **DIORGANOPOLYSILOXANE AND METHOD OF MANUFACTURING THEREOF**
DIORGANOPOLYSILOXAN UND HERSTELLUNGSVERFAHREN DAFÜR
DIORGANOPOLYSILOXANE ET SON PROCÉDÉ DE FABRICATION

(30) Priority: 28.09.2006 JP 2006265954
(43) Date of publication of application: 10.06.2009
(73) Proprietor: Dow Corning Toray Co., Ltd., Tokyo 100-0005 (JP)
(72) Inventor: MORITA, Yoshitsugu, Ichihara-shi Chiba 299-0108 (JP)
(74) Representative: Gillard, Richard Edward
(86) International application number: PCT/JP2007/067696
(87) International publication number: WO 2008/038516

(56) References cited:
- WO-A-2006/098493
- US-A- 5 486 588

## Description

### Technical Field

The present invention relates to a diorganopolysiloxane and to a method of manufacturing thereof. More particularly, the invention relates to a novel diorganopolysiloxane that has on a molecular terminal an organopolysiloxane residue that contains an alkyl group with seven or more carbon atoms and to a method of manufacturing the novel diorganopolysiloxane.

### Backeround Art

Known in the art is a diorganopolysiloxane that has an epoxy-containing organopolysiloxane residue on its molecular terminal (see Japanese Unexamined Patent Application Publication (hereinafter referred to as "Kokai") H05-140317 and Kokai H06-56999). It was found that when this diorganopolysiloxane is combined with a curable organic resin, this improves flexibility of a cured body obtained by curing the composition. However, the aforementioned diorganopolysiloxane has a high viscosity because of the presence of the epoxy groups, which are polar groups, and, as a result, has poor handleability and poor miscibility with organic resins.

It is an object of the present invention to provide a novel diorganopolysiloxane that possesses improved miscibility with curable organic resin compositions and that has on its molecular terminal an organopolysiloxane residue with an alkyl group having seven or more carbon atoms. It is another object to provide a method of manufacturing the aforementioned diorganopolysiloxane.

### Disclosure of Invention

The diorganopolysiloxane of the invention is represented by the following general formula:

X-R²-(R¹₂SiO)ₙR¹₂Si-R²-X

{where R¹ designates a monovalent hydrocarbon group that has six or fewer carbon atoms and is free of aliphatic unsaturated bonds; R² designates an alkylene group; and X is an organopolysiloxane residue represented by the following average unit formula:

(YR¹₂SiO_{½})ₐ (SiO_{4/2})_{b}

(where R¹ is the same as defined above; Y is a single bond, a hydrogen atom, a group represented by aforementioned R¹, an epoxy-containing alkyl group, an alkoxysilylalkyl group, or an alkyl group with seven or more carbon atoms; however, in one molecule, at least one Y is a single bond, and at least one Y is an alkyl group with seven or more carbon atoms; "a" is a positive number; "b" is a positive number; and "a/b" is a number in the range of 0.2 to 4.0), the aforementioned group represented by R¹ or an alkenyl group; however, at least one X is the aforementioned organopolysiloxane residue; and "n" is an integer in the range of 1 to 1,000}.

The invention also relates to a method of manufacturing the aforementioned diorganopolysiloxane. This method comprises subjecting the following components to a hydrosilylation reaction:
(A) an organopolysiloxane represented by the following average unit formula:

   (R³R¹₂SiO_{½})ₐ (SiO_{4/2})_{b}

   (where R¹ designates a monovalent hydrocarbon group that has six or fewer carbon atoms and is free of aliphatic unsaturated bonds; R³ designates a hydrogen atom or a group represented by the aforementioned R¹; however, in one molecule at least two R³s are hydrogen atoms; "a" is a positive number; "b" is a positive number; and "a/b" is a number in the range of 0.2 to 4.0);
(B) a diorganopolysiloxane represented by the following general formula:

   R⁴-(R¹₂SiO)ₙR¹₂Si-R⁴

   (where R¹ is the same as defined above; R⁴ is a group designated by aforementioned R¹ or and alkenyl group; however, at least one R⁴ is an alkenyl group; and "n" is an integer in the range of 1 to 1,000); and
(C) an alkene having seven or more carbon atoms, the reaction being carried out in the presence of (D) a platinum-type catalyst.

### Effects of Invention

The diorganopolysiloxane of the invention is a novel compound that is characterized by improved miscibility with curable organic resin compositions and that has on its molecular terminal an organopolysiloxane residue with an alkyl group having seven or more carbon atoms. The manufacturing method of the present invention makes it possible to produce the aforementioned diorganopolysiloxane with high efficiency.

### Detailed Description of the Invention

Let us first consider in more detail the diorganopolysiloxane of the present invention.

The diorganopolysiloxane of the invention is represented by the following general formula:

X-R²-(R¹₂SiO)ₙR¹₂Si-R²-X

In this formula, R¹ is a monovalent hydrocarbon group that has six or fewer carbon atoms and that is free of unsaturated aliphatic bonds. Specific examples of such a group are the following: methyl, ethyl, propyl, butyl, pentyl, hexyl, or similar alkyl groups; cyclopentyl, cyclohexyl, or similar cycloalkyl groups; phenyl, or similar aryl groups; and chloromethyl, 3,3,3-trifluoropropyl, or similar halogenated alkyl groups; of which methyl and phenyl groups are preferable. Furthermore, in the above formula, R² designates an alkylene group that is exemplified by ethylene, methylethylene, propylene, butylene, pentylene, and hexylene group, of which ethylene group is preferable.

In the above formula, X is an organopolysiloxane residue represented by the following average unit formula:

(YR¹₂SiO_{½})ₐ (SiO_{4/2})_{b},

the aforementioned group represented by R¹ or an alkenyl group. In the above formula, R¹ is a monovalent hydrocarbon group that has six or fewer carbon atoms and that is free of unsaturated aliphatic bonds. Such a group is exemplified by the same groups mentioned above, of which methyl and phenyl groups are preferable. Furthermore, in the above formula, Y represents a single bond, a hydrogen atom, a group designated by the aforementioned R¹, an epoxy-containing alkyl group, an alkoxysilylalkyl group, or an alkyl group with seven or more carbon atoms. The epoxy-containing alkyle group is exemplified by 2-glycidoxyethyl group, 3-glicydoxypropyl group, or a similar glycidoxyalkyl group; 2-(3,4-epoxycyclohexyl) ethyl, or a similar epoxycyclohexylalkyl group; and 4-oxiranylbutyl, 8-oxiranyloctyl, or a similar oxiranylalkyl group, of which a glycidoxyalkyl group is preferable, in particular, 3-glicydoxypropyl group is more preferable. The alkoxysilylalkyl group is exemplified by trimethoxysilylethyl group, trimethoxysilylpropyl group, dimethoxymethylsilylpropyl group, methoxydimethylsilylpropyl group, triethoxysilylethyl group, and tripropoxysilylpropyl group. The alkyl group with seven or more carbon atoms is exemplified by heptyl, octyl, nonyl, decyl, undecyl, dodecyl, heptadecyl, and octydecyl group, of which an alkyl group having 7 to 18 carbon atoms is preferable, in particular, an alkyl group having 10 to 18 carbon atoms is more preferable. At least one Y in one molecule is a single bond through which the aforementioned R² is bonded. Furthermore, at least one Y in one molecule is an alkyl group with seven or more carbon atoms. In order to impart improved reactivity to the obtained diorganopolysiloxane, it is preferable that at least one Y in one molecule be an epoxy-containing alkyl group and/or an alkoxysilylalkyl group. When in the above formula X represents a group designated by R¹, this may be the same group as mentioned above, of which methyl and phenyl groups are preferable. When in the above formula X is an alkenyl group, such group is specifically exemplified by vinyl, allyl, propenyl, butenyl, pentenyl, hexenyl, and heptenyl group, of which vinyl group is preferable. Furthermore, at least one X in the above formula is the aforementioned organopolysiloxane residue. It is preferable that all Xs are the aforementioned organopolysiloxane residues. In the above formula, "a" is a positive number, "b" is a positive number, and "a/b" is a number in the range of 0.2 to 4.0.

In the above formula, "n" is an integer from 1 to 1,000. In order to improve handleability of the diorganopolysiloxane of the invention, it is recommended that "n" be in the range of 1 to 500.

There are no special restrictions with regard to the molecular weight of the diorganopolysiloxane of the invention, but in order to improve miscibility with an organic resin composition or with an inorganic powder when the latter is added to the mixture, as well as to improve handleability of the obtained composition, it is recommended that the weight average molecular weight (M_{w}) referenced to polystyrene and determined by gel permeation chromatography be in the range of 500 to 1,000,000.

The following description relates to the method of manufacturing the diorganopolysiloxane of the invention.

Component (A) of the composition is an organopolysiloxane which is intended for introduction of an organopolysiloxane residue to a molecular terminal of the diorganopolysiloxane. This component is represented by the following average unit formula:

(R³R¹₂SiO_{1/2}), (SiO_{4/2})_{b}

where R¹ is a monovalent hydrocarbon group having six or fewer carbon atoms and is free of unsaturated aliphatic bonds. This group is exemplified by the same groups as mentioned above, of which methyl and phenyl groups are preferable. In the above formula, R³ is a hydrogen atom or the same group as represented by aforementioned R¹. However, at least two R³s in one molecule are hydrogen atoms. Furthermore, in the above formula, "a" is a positive number, "b" is a positive number, and "a/b" is a number in the range of 0.2 to 4.0.

There are no special restrictions with regard to the method that can be used for the preparation of the organopolysiloxane which constitutes aforementioned component (A). For example, the following methods can be used: co-hydrolyzation of a tetrahalosilane and a monohalosilane, co-hydrolyzation of a tetraalkoxysilane and a monoalkoxysilane, and hydrolysis and equilibrium repolymerization of tetraalkoxysilane and a tetraorganosiloxane, preferably by dropwise adding the tetraalkoxysilane while stirring an organic silicon compound selected from the group consisting of a hexaorganodisiloxane, a tetraorganodisiloxane, a triorganohalosilane, or a diorganohalosilane in an aqueous solution of hydrochloric acid (see Kokai S61-195129).

Component (B) is a diorganopolysiloxane that is added to the composition to form the main chain of the diorganopolysiloxane of the invention. This component is represented by the following general formula:

R⁴-(R¹₂SiO)ₙR¹₂Si-R⁴

where R¹ is a monovalent hydrocarbon group that has six or fewer carbon atoms and is free of unsaturated aliphatic bonds. This group is represented by the same groups as mentioned above, of which methyl and phenyl groups are preferable. Furthermore, in the above formula, R⁴ may be the same group as the aforementioned R¹ or an alkenyl group. When R⁴ is the same group as the aforementioned R¹, it is exemplified by the same groups as mentioned above, of which methyl group is preferable. When R⁴ is an alkenyl group, it is exemplified by vinyl, allyl, propenyl, butenyl, pentenyl, hexenyl, or heptenyl group, of which vinyl group is preferable. At least one R⁴ in the above formula is an alkenyl group, and it is preferable that all R⁴s be alkenyl groups. Furthermore, in the above formula, "n" is an integer in the range of 1 to 1,000. In order to impart to the obtained diorganopolysiloxane excellent miscibility with organic resins and improved flexibility of the cured body obtained from the aforementioned curable composition mixed with organic resin, it is recommended that "n" is an integer in the range of 1 to 500.

The following are examples of the diorganopolysiloxane that constitutes component (B): a dimethylpolysiloxane having one molecular terminal capped with a dimethylvinyisitoxy group and another molecular terminal capped with a trimethylsiloxy group; a dimethylpolysiloxane having both molecular terminals capped with dimethylvinylsiloxy groups; a dimethylpolysiloxane having both molecular terminals capped with dimethylallylsiloxy groups; a dimethylpolysiloxane having both molecular terminals capped with dimethylhexenylsiloxy groups; a methylethylpolysiloxane having both molecular terminals capped with dimethylvinylsiloxy groups; a methylethylpolysiloxane having both molecular terminals capped with dimethylallylsiloxy groups; a methylphenylpolysiloxane having one molecular terminal capped with a dimethylvinylsiloxy group and another molecular terminal capped with a trimethylsiloxy group; a methylphenylpolysiloxane having both molecular terminals capped with dimethylvinylsiloxy groups; a methylphenylpolysiloxane having both molecular terminals capped with dimethylallylsiloxy groups; a methylphenylpolysiloxane having both molecular terminals capped with dimethylhexenylsiloxy groups; a methylphenylpolysiloxane having both molecular terminals capped with diphenylvinylsiloxy groups; a copolymer of methylphenylsiloxane and dimethylsiloxane having both molecular terminals capped with dimethylvinylsiloxy groups; a copolymer of diphenylsiloxane and dimethylsiloxane capped at both molecular terminals with dimethylvinylsiloxy groups; a copolymer of diphenylsiloxane and dimethylsiloxane having both molecular terminals capped with dimethylallylsiloxy groups; and a diphenylpolysiloxane capped at both molecular terminals with dimethylvinylsiloxy groups.

In the method of the invention, component (B) is added to the composition in an amount such that approximately one alkenyl group contained in this component can react with one silicon-bonded hydrogen atom contained in component (A). More specifically, component (B) is added in an amount such that 0.7 to 1.1 alkenyl groups, preferably 0.7 to 1.0 alkenyl groups, and more preferably 0.8 to 1.0 alkenyl group contained in component (B) will react with 1.0 silicon-bonded hydrogen atom of component (A). If component (B) is added in an amount lower than the recommended lower limit, this will decrease the yield of the objective product. On the other hand, if component (B) is added in an amount exceeding the recommended upper limit, this will not noticeably improve the yield of the objective product or may cause gelling of the reaction system.

The number of silicon-bonded hydrogen atoms contained in one molecule of component (A) can be determined from the number-average molecular weight obtained by gel-permeation chromatography, the ratio of siloxane units determined by ¹H- and ²⁹Si-nuclear magnetic resonance analysis, and an equivalent quantity of silicon-bonded hydrogen atoms. Similarly, the number of alkenyl groups in one molecule of component (B) can be determined from the number-average molecular weight obtained by gel-permeation chromatography, the ratio ofsiloxane units determined by ¹H- and ²⁹Si-nuclear magnetic resonance analysis, and an equivalent quantity of alkenyl groups.

Component (C) is an alkene with seven or more carbon atoms used to introduce alkyl groups with seven or more carbon atoms to the organopolysiloxane residue. Component (C) is exemplified by heptene, octene, nonene, decene, undecene, dodecene, heptadecene, or octadecene, of which an alkene with 7 to 18 carbon atoms is preferable, in particular, an alkene with 10 to 18 carbon atom is preferable. There are no special restrictions with regard to the carbon-carbon-type double-bonding position in the aforementioned alkene, but the position on the molecular terminal is preferable for better reactivity.

In the manufacturing method of the invention, component (C) is used in an amount such that one or more, and preferably two or more, of component (C) corresponds to one silicon-bonded hydrogen atom remaining in one molecule of the product obtained when component (A) reacts with component (B). If other components, which are described later, are not added, it is recommended to add component (C) in an amount exceeding the equivalent quantity relative to the silicon-bonded hydrogen atoms remaining in the product obtained as a result of the reaction between components (A) and (B). If component (C) is added in an amount below the recommended lower limit, then it will be impossible to introduce a sufficient amount of alkyl groups having seven or more carbon atoms to the organopolysiloxane residue of the obtained product.

Component (D) is a platinum-type catalyst used for accelerating the hydrosilylation reaction between silicon-bonded hydrogen atoms of component (A) and alkenyl groups of component (B) or for accelerating the hydrosilylation reaction between silicon-bonded hydrogen atoms of component (A) and alkenyl group of component (C). There are no special restrictions with regard to the amount in which the platinum-type catalyst of component (D) can be used provided that it is suitable for use as a hydrosilylation-reaction catalyst. Specific examples of this component are the following: chloroplatinic acid, an alcohol solution of chloroplatinic acid, a complex of platinum and unsaturated aliphatic hydrocarbons, a complex of platinum and vinylsiloxane, platinum black, or platinum on an activated carbon carrier.

There are no special restrictions with regard to the amount in which component (D) can be used in the manufacturing method of the invention. More specifically, it may be recommended to use this component in an amount such that, in terms of weight units the content of platinum atoms in component (D) be in the range of 0.01 to 500 ppm per total weight of the starting material. If component (D) is used in an amount lower than the recommended lower limit, it will be difficult to provide sufficient acceleration of the hydrosilylation reaction. If this component is used in an amount exceeding the recommended upper limit, this will be economically unjustifiable.

For introduction of epoxy-containing alkyl groups to the organopolysiloxane residues, the method of the invention may also include a reaction with (E) an epoxy-containing alkene. Component (E) is exemplified by vinylglycidylether, allylglycidylether, butenylglicidylether, or a similar alkenylglycidylether; 1,2-epoxy-4-vinylcyclohexane, 2,3-epoxy-5-vinylnorbornene, and 1,2-epoxy-1-methyl-4-isopropenylcyclohexane; of which allylglycidylether is preferable.

In the manufacturing method of the invention, component (E) can be added in an amount such that one or more, preferably two or more, should correspond to one silicon-bonded hydrogen atom contained in one molecule and remaining in the product obtained as a result of a reaction among components (A), (B), and (C). If other components do not participate in the reaction, it is recommended that component (E) be used in an amount exceeding the equivalent quantity with respect to the silicon-bonded hydrogen atoms remaining in the product obtained through the reaction among components (A), (B), and (C). If component (E) is added in an amount less than the recommended lower limit, it will be difficult to provide sufficient introduction of the epoxy-containing alkyl groups into the organopolysiloxane residues contained in the obtained product.

In order to introduce alkoxysilylalkyl groups to the organopolysiloxane residues, the method of the invention may also include a reaction with (F) an alkoxysilylalkene. Component (F) is exemplified by vinyltrimethoxysilane, vinyltriethoxysilane, methylvinyldimethoxysilane, allyltrimethoxysilane, allylmethyldiethoxysilane, and diphenylvinylmethoxysilane, of which allyltrimethoxysilane is preferable.

It is recommended to use component (F) in the method of the invention in an amount such that one or more, and preferably two or more, of component (F) equivalents correspond to one silicon-bonded hydrogen atom contained in one molecule and remaining in the product obtained in the reaction among components (A), (B), and (C). When other components do not participate in the reaction, the added amount of component (F) should exceed the equivalent quantity with respect to the silicon-bonded hydrogen atoms that remain in the product of the reaction among (A), (B), and (C). If component (F) is used in an amount less than the recommended lower limit, it will be difficult to provide sufficient introduction of the alkoxysilylalkyl groups into the organopolysiloxane residue of the obtained product.

There are no special restrictions with regard to the sequence of manufacturing and reaction steps. For example,
(1) a mixture can be prepared from components (A), (B), and (C), and component (D) is added and caused to react with the mixture;
(2) a mixture can be prepared from components (A), (B), and (C), component (D) is added and caused to react with the mixture, and then component (E) is added and reacts with the product;
(3) a mixture can be prepared from components (A), (B), and (C), component (D) is added and caused to react with the mixture, and then component (F) is added and reacts with the product;
(4) a mixture can be prepared from components (A), (B), and (C), component (D) is added and caused to react with the mixture, and then components (E) and (F) are added and react with the product;
(5) a mixture can be prepared from components (A), (B), (C), and (E), and then component (D) is added and caused to react with the mixture;
(6) a mixture can be prepared from components (A), (B), (C), and (E), and then component (D) is added and caused to react with the mixture, and following this, component (F) is added and caused to react ; or
(7) a mixture can be prepared from components (A), (B), (C), and (F), and then component (D) is added and caused to react with the mixture, and following this, component (E) is added and caused to react with the mixture.

There are no special restrictions with regard to the reaction temperature, but for acceleration of the reaction to completion, the reaction can be carried out at a temperature from room temperature to 150°C. If necessary, the method of the invention can be carried out with the use of a solvent. Such a solvent may be an organic solvent, e.g., toluene, xylene, or a similar aromatic-type organic solvent; hexene, heptane, octane, or a similar aliphatic-type organic solvent; and acetone, methylethylketone, or a similar ketone-type organic solvent. A diorganopolysiloxane of the invention produced by the aforementioned method will be obtained in the form of a reaction mixture, but the mixture can be purified by a stationary method, centrifugal separation, or by a method using difference of solubility in organic solvents.

### Examples

The diorganopolysiloxane and the manufacturing method of the invention will be further described in more details with reference to practical examples. Viscosity of the obtained diorganopolysiloxane was measured by the method described below.

### [Determination of Viscosity]

Viscosity of the diorganopolysiloxane at 25°C was measured by an E-type viscometer (Digital Viscometer DV-U-E Type II, the product of Tokimec Co., Ltd.), rotation speed: 20 rpm.

### [Practical Example 1]

A one-liter-capacity four-neck flask equipped with a stirrer, a reflux condenser, a Dean-Stark tube, and a thermometer was loaded with the following components:
50.00 g of an organopolysiloxane having in one molecule on average 10 silicon-bonded hydrogen atoms and represented by the following average unit formula:

   [(CH₃)₂HSiO_{1/2}]_{1.6}(SiO_{4/7})_{1.0} ;
144.84 g of a dimethylpolysiloxane represented by the following average formula:

   (CH₃)₂(CH₂=CH) SiO[(CH₃)₂ SiO]₉₇ Si(CH₃)₂(CH=CH₂);
31.85 g of 1-decene; and
104.60 g of toluene.
The mixture was heated, and an azeotropic substance composed of toluene and water contained in the system was removed, and the product was cooled in a nitrogenous atmosphere.

In the next step, 30 µL of a 10 wt.% isopropanol solution of a platinum-1,3-divinyltetramethyldisiloxane complex was dropwise added to the system by using a dropping pipette, and the mixture generated a heat to 66°C. Following this, the mixture was heated to 87°C, 32.34 g of allylglycidylether were added, and the mixture generated a heat to 109°C. Stirring was carried out for 2 hours and 45 minutes while heating at a temperature in the range of 109°C to 117°C. Infrared analysis (hereinafter referred to as "IR") was carried out in order to verify that the reaction mixture was free of the characteristic absorption of Si-H bonds, and then the product was cooled to room temperature. Following this, the product was heated at 130°C under a reduced pressure of 1 mmHg for removal of toluene and unreacted allylglycidylether, whereby 243.7 g of a slightly brown semitransparent liquid were obtained with a yield of 98.0 %.

The obtained liquid had an epoxy equivalent equal to 1,169 and a viscosity of 3,770 mPa·s. The liquid was held in a quiescent state for one month at room temperature, but no separation of layers was observed. Analysis of the liquid by gel-permeation chromatography (hereinafter referred to as "GPC") showed that the main component had weight-average molecular weight (M_{w}) referenced to polystyrene equal to 73,730 and dispersion (M_{w}/Mₙ) equal to 2.7. The content of the main component was 91.5 wt.%.

Samples of the aforementioned main component were taken by means of GPC and subjected to structural analysis by carrying out ¹H-nuclear magnetic resonance analysis (hereinafter referred to as "¹H-NMR"), ¹³C-nuclear magnetic resonance analysis (hereinafter referred to as "¹³C-NNM"), and ²⁹Si-nuclear magnetic resonance analysis (hereinafter referred to as "²⁹Si-NMR"). These analyses showed that the product comprised a diorganopolysiloxane represented by the following average formula:

X-CH₂CH₂(CH₃)₂ SiO[(CH₃)₂ SiO]₉₇Si(CH₃)₂CH₂CH₂-X

{where X is an organopolysiloxane residue represented by the following average unit formula:

[Y(CH₃)₂ SiO_{1/2}]_{1.6}(SiO_{4/2})_{1.0}

(where Y consists of single bonds, n-decyl groups, and 3-glycidoxypropyl groups; one Y in one molecule is a single bond, and the remaining Ys are composed of n-decyl groups and 3-glycidoxypropyl groups; the mole ratio between these groups is approximately 1:1)}.

### [Comparative Example 1]

A one-liter-capacity four-neck flask equipped with a stirrer, a reflux condenser, a Dean-Stark tube, and a thermometer was loaded with the following components:
100.00 g of an organopolysiloxane having in one molecule on average 10 silicon-bonded hydrogen atoms and represented by the following average unit formula:

   [(CH₃)₂HSiO_{1/2}]_{1.6}(SiO_{4/2})_{1.0};
289.29 g of dimethylpolysiloxane represented by the following average formula:

   (CH₃)₂(CH₂=CH) SiO[(CH₃)₂ SiO]₉₇ Si(CH₃)₂(CH=CH₂);
54.69 g of allylglycidylether; and
120.66 g of toluene.
The mixture was heated, and an azeotropic substance composed of toluene and water contained in the system was removed, and the product was cooled in a nitrogenous atmosphere.

In the next step, 35 µL of a 10 wt.% isopropanol solution of a platinum-1,3-divinyltetramethyldisiloxane complex was dropwise added to the system by using a dropping pipette, and the mixture generated a heal to 63°C. Following this, the mixture was heated to 94°C, 68.15 g of allylglycidylether were added, and the mixture generated a heat to 106°C. Stirring was carried out for 1 hour and 40 minutes while heating at a temperature in the range of 100°C to 123°C. IR was carried out in order to verify that the reaction mixture was free of the characteristic absorption of Si-H bonds, and then the product was cooled to room temperature. Following this, the product was heated at 140°C under a reduced pressure of 4 mmHg for removal of toluene and unreacted allylglycidylether, whereby 482.1 g of a slightly brown semitransparent liquid were obtained with a yield of 97.9 %.

The obtained liquid had an epoxy equivalent equal to 760 and viscosity of 19,850 mPa·s. The liquid was held in a quiescent state for one month at room temperature, but no separation of layers was observed. Analysis of the liquid by GPC showed that the main component had weight-average molecular weight (M_{w}) referenced to polystyrene equal to 70,000 and dispersion (M_{w}/Mₙ) equal to 2.8. The content of the main component was 97.0 wt.%.

Samples of the aforementioned main component were taken by means of GPC and subjected to structural analysis by carrying out ¹H-NMR, ¹³C-NMR, and ²⁹Si-NMR. These analyses showed that the product comprised a diorganopolysiloxane represented by the following average formula:

X-CH₂CH₂(CH₃)₂ SiO[(CH₃)₂ SiO]₉₇Si(CH₃)₂CH₂CH₂-X

{where X is an organopolysiloxane residue represented by the following average unit formula:

[Y(CH₃)₂ SiO_{1/2}]_{1.6}(SiO_{4/2})_{1.0}

(where Y consists of single bonds and 3-glycidoxypropyl groups; one Y in one molecule is a single bond, and the remaining Ys are composed of 3-glycidoxypropyl groups)}.

### [Practical Example 2]

A one-liter-capacity four-neck flask equipped with a stirrer, a reflux condenser, a Dean-Stark tube, and a thermometer was loaded with the following components:
50.06 g of an organopolysiloxane having in one molecule on average 10 silicon-bonded hydrogen atoms and represented by the following average unit formula:

   [(CH₃)₂HSiO_{1/2}]₁.₆(SiO_{4/2})_{1.0};
147.99 g of a dimethylpolysiloxane represented by the following average formula:

   (CH₃)₂(CH₂=CH) SiO[(CH₃)₂ SiO]₁₆₂ Si(CH₃)₂(CH=CH₂);
13.12 g of 1-decene;
15.22 g of allyltrimethoxysilane; and
89.51 g of toluene.
The mixture was heated, and an azeotropic substance composed of toluene and water contained in the system was removed, and the product was cooled in a nitrogenous atmosphere.

In the next step, 20 µL of a 10 wt.% isopropanol solution of a platinum-1,3-divinyltetramethyldisiloxane complex was dropwise added to the system by using a dropping pipette, and the mixture was heated for 30 minutes to 118°C. Following this, the product was air-cooled to 99°C, and 32.71 g of allylglycidylether were added. Stirring was carried out for 20 minutes at 122°C. IR was carried out in order to verify that the reaction mixture was free of the characteristic absorption of Si-H bonds, and then the product was cooled to room temperature. Toluene and unreacted allylglycidylether were removed by distillation under reduced pressure of 4 mmHg and at a temperature of 140°C, whereby 251.8 g of a slightly brown semitransparent liquid were obtained with a yield of 98.0 %.

The obtained liquid had viscosity of 3,910 mPa·s. The liquid was held in a quiescent state for one month at room temperature, but no separation of layers was observed. GPC of the liquid showed that the main component had weight-average molecular weight (M_{w}) referenced to polystyrene equal to 42,400 and dispersion (M_{w}/Mₙ) equal to 1.7. The content of the main component was 95.0 wt.%.

A sample of the aforementioned main component was taken by means of GPC and subjected to structural analysis by carrying out ¹H-NMR, ¹³C-NMR, and ²⁹Si-NMR. These analyses showed that the product comprised a diorganopolysiloxane represented by the following average formula:

X-CH₂CH₂(CH₃)₂ SiO[(CH₂)₂ SiO]₁₆₂Si(CH₃)₂CH₂CH₂-X

{where X is an organopolysiloxane residue represented by the following average unit formula:

[Y(CH₃)₂ SiO_{1/2}]_{1.6}(SiO_{4/2})_{1.0}

(where Y consists of single bonds, n-decyl groups, trimethoxysilylpropyl groups, and 3-glycidoxypropyl groups; one Y in one molecule is a single bond, and the remaining Ys are composed of n-decyl groups, trimethoxysilylpropyl groups, and 3-glycidoxypropyl groups; the mole ratio between these groups is approximately 1:1:3)}.

### [Comparative Example 2]

A one-liter-capacity four-neck flask equipped with a stirrer, a reflux condenser, a Dean-Stark tube, and a thermometer was loaded with the following components:
100.06 g of an organopolysiloxane having in one molecule on average 10 silicon-bonded hydrogen atoms and represented by the following average unit formula:

   [(CH₃)₂HSiO_{1/2}]_{1.6}(SiO_{4/2})_{1.0};
307.60 g of dimethylpolysiloxane represented by the following average formula:

   (CH3)₂(CH₂=CH) SiO[(CH₃)₂ SiO]₁₆₂ Si(CH₃)₂(CH=CH₂);
40.66 g of allylglycidylether;
30.24 g of allyltrimethoxysilane; and
102.85 g of toluene.
The mixture was heated, and an azeotropic substance composed of toluene and water contained in the system was removed, and the product was cooled in a nitrogenous atmosphere.

In the next step, 35 µL of a 10 wt.% isopropanol solution of a platinum-1,3-divinyltetramethyldisiloxane complex was dropwise added to the system by using a dropping pipette, and the mixture generated a heat to 79°C. Following this, the mixture was heated to 100°C, 59.73 g of allylglycidylether were added, and, while being stirred, the product was heated for 20 minutes at a temperature in the range of 100°C to 112°C. IR was carried out in order to verify that the reaction mixture was free of the characteristic absorption of Si-H bonds, and then the product was cooled to room temperature. Following this, the product was heated at 130°C under reduced pressure of 3 mmHg for removal of toluene and unreacted allylglycidylether by distillation, whereby 513.59 g of a slightly brown cloudy liquid were obtained.

The obtained liquid had viscosity of 12,000 mPa·s. The liquid was held in a quiescent state for one month at room temperature, but no separation of layers was observed. GPC of the liquid showed that the main component had weight-average molecular weight (M_{w}) referenced to polystyrene equal to 51,000 and dispersion (M_{w}/Mₙ) equal to 1.6. The content of the main component was 78.5wt.%.

A sample of the aforementioned main component was taken by means of GPC and subjected to structural analysis by carrying out ¹H-NMR, ¹³C-NMR, and ²⁹Si-NMR. These analyses showed that the product comprised a diorganopolysiloxane represented by the following average formula:

X-CH₂CH₂(CH₃)₂ SiO[(CH₃)₂ SiO]₁₆₂Si(CH₃)₂CH₂CH₂-X

(where X is an organopolysiloxane residue represented by the following average unit formula:

[Y(CH₃)₂ SiO_{1/2}]_{1.6}(SiO_{4/2})_{1.0}

(where Y consists of single bonds, trimethoxysilylpropyl groups, and 3-glycidoxypropyl groups; one Y in one molecule is a single bond, and the remaining Ys are composed of trimethoxysilylpropyl and 3-glycidoxypropyl groups; the mole ratio between these groups is approximately 1:4)}.

### [Practical Example 3]

A one-liter-capacity four-neck flask equipped with a stirrer, a reflux condenser, a Dean-Stark tube, and a thermometer was loaded with the following components:
100.00 g of an organopolysiloxane having in one molecule on average 5 silicon-bonded hydrogen atoms and represented by the following average unit formula:

   [(CH₃)₂HSiO_{1/2}]_{0.8} [(CH₃)₃SiO_{1/2})_{0.8} (SiO_{4/2})_{1.0};
230.60 g of a dimethylpolysiloxane represented by the following average formula:

   (CH₃)₂(CH₂=CH)SiO[(CH₃)₂ SiO]₉₇ Si(CH₃)₂(CH=CH₂);
16.54 g of 1-octadecene;
8.80 g of allylglycidylether; and
86.74 g of toluene.
The mixture was heated, and an azeotropic substance composed of toluene and water contained in the system was removed, and the product was cooled in a nitrogenous atmosphere.

In the next step, 30 µL of a 10 wt.% isopropanol solution of a platinum-1,3-divinyltetramethyldisiloxane complex was dropwise added to the system by using a dropping pipette, and the mixture generated a heat to 53°C. Following this, the product was heated to 102°C, and 30.05 g of allylglycidylether were added. Stirring was carried out for 20 minutes at a temperature between 100°C and 101°C. IR was carried out in order to verify that the reaction mixture was free of the characteristic absorption of Si-H bonds, and then the product was cooled to room temperature. Toluene and unreacted allylglycidylether were removed by distillation under reduced pressure of 2 mmHg and at a temperature of 130°C, whereby 375.92 g of a slightly brown transparent liquid were obtained with a yield of 99.7%.

The obtained liquid had an epoxy equivalent of 1,435 and viscosity of 590 mPa·s. The liquid was held in a quiescent state for one month at room temperature, but no separation of layers was observed. GPC of the liquid showed that the main component had weight-average molecular weight (M_{w}) referenced to polystyrene equal to 47,200 and dispersion (M_{w}/Mₙ) equal to 2.0. The content of the main component was 89.3 wt.%.

A sample of the aforementioned main component was taken by means of GPC and subjected to structural analysis by carrying out ¹H-NMR, ¹³C-NMR, and ⁹Si-NMR. These analyses showed that the product comprised a diorganopolysiloxane represented by the following average formula:

X-CH₂CH₂(CH₃)₂ SiO[(CH₃)₂ SiO]₉₇Si(CH₃)₂CH₂CH₂-X

{where X is an organopolysiloxane residue represented by the following average unit formula:

[Y(CH₃)₂ SiO_{1/2}]_{0.8} [(CH₃)₃ SiO_{1/2}]_{0.8} (SiO_{4/2})_{1.0}

(where Y consists of a single bond, n-octadecyl groups and 3-glycidoxypropyl groups; one Y in one molecule is a single bond, and the remaining Ys are composed of n-octadecyl groups and 3-glycidoxypropyl groups; the mole ratio between these groups is approximately 1:5)}.

### [Practical Example 4]

A one-liter-capacity four-neck flask equipped with a stirrer, a reflux condenser, a Dean-Stark tube, and a thermometer was loaded with the following components:
100.02 g of an organopolysiloxane having in one molecule on average 5 silicon-bonded hydrogen atoms and represented by the following average unit formula:

   [(CH₃)₂HSiO_{1/2}]_{0.8} [(CH₃)₃SiO_{1/2})]_{0.8} (SiO_{4/2})_{1.0};
230.54 g of a dimethylpolysiloxane represented by the following average formula:

   (CH₃)₂(CH₂=CH)SiO[(CH₃)₂ SiO]₉₇ Si(CH₃)₂(CH=CH₂) ;
57.28 g of 1-decene; and
91.93 g of toluene.
The mixture was heated, and an azeotropic substance composed of toluene and water contained in the system was removed, and the product was cooled in a nitrogenous atmosphere.

In the next step, 30 µl of a 10 wt.% isopropanol solution of a platinum-1,3-divinyltetramethyldisiloxane complex was dropwise added to the system by using a dropping pipette, and the mixture generated a heat to 60°C. Following this, the product was heated to 114°C, and stirring was carried out for 1 hour at a temperature between 113°C and 114°C. IR was carried out in order to verify that the reaction mixture was free of the characteristic absorption of Si-H bonds, and then the product was cooled to room temperature. Toluene and unreacted allylglycidylether were removed by distillation under reduced pressure of 3 mmHg and at a temperature between 130°C and 135°C, whereby 357.53 g of a slightly brown transparent liquid were obtained with a yield of 95.0 %.

The obtained liquid had a viscosity of 640 mPa·s. GPC of the liquid showed that the main component had weight-average molecular weight (M_{w}) referenced to polystyrene equal to 42,600 and dispersion (M_{w}/Mₙ) equal to 1.9. The content of the main component was 87.3 wt.%.

A sample of the aforementioned main component was taken by means of GPC and subjected to structural analysis by carrying out ¹H-NMR, ¹³C-NMR, and ⁹Si-NMR. These analyses showed that the product comprised a diorganopolysiloxane represented by the following average formula:

X-CH₂CH₂(CH₃)₂ SiO[(CH₃)₂ SiO]₉₇Si(CH₃)₂CH₂CH₂-X

{where X is an organopolysiloxane residue represented by the following average unit formula:

[Y(CH₃)₂ SiO_{1/2}]_{0.8} [(CH₃)₃ SiO_{1/2]0.8} (SiO_{4/2})_{1.0}

(where Y consists of single bonds and n-decyl groups; one Y in one molecule is a single bond, and the remaining Ys are n-decyl groups)}.

### [Comparative Example 3]

A one-liter-capacity four-neck flask equipped with a stirrer, a reflux condenser, a Dean-Stark tube, and a thermometer was loaded with the following components:
100.05 g of an organopolysiloxane having in one molecule on average 5 silicon-bonded hydrogen atoms and represented by the following average unit formula:

   [(CH₃)₂HSiO_{1/2}]_{0.8} [(CH₃)₃SiO_{1/2})]_{0.8} (SiO_{4/2})_{1.0};
230.14 g of a dimethylpolysiloxane represented by the following average formula:

   (CH₃)₂(CH₂=CH) SiO[(CH₃)₂ SiO]₉₇ Si(CH₃)₂(CH=CH₂);
15.63 g of allylglycidylether; and
87.25 g of toluene.
The mixture was heated, and an azeotropic substance composed of toluene and water contained in the system was removed, and the product was cooled in a nitrogenous atmosphere.

In the next step, 30 µL of a 10 wt.% isopropanol solution of a platinum-1,3-divinyltetramethyldisiloxane complex was dropwise added to the system by using a dropping pipette, and the mixture generated a heat to 32°C. Following this, the product was heated to 104°C, and 33.57 g of an allylglycidylether were added, and the mixtue generated a heat to 117°C and then air-cooled to 100°C. IR was carried out in order to verify that the reaction mixture was free of the characteristic absorption of Si-H bonds, and then toluene and unreacted allylglycidylether were removed by distillation under reduced pressure of 1 to 3 mmHg and at a temperature of 130°C, whereby 365.78 g of a slightly brown semitransparent liquid were obtained with a yield of 99.4 %.

The obtained liquid had an epoxy equivalent of 1,150 and a viscosity of 2,700 mPa·s. GPC of the liquid showed that the main component had weight-average molecular weight (M_{w}) referenced to polystyrene equal to 49,000 and dispersion (M_{w}/Mₙ) equal to 2.2. The content of the main component was 91.2 wt.%.

A sample of the aforementioned main component was taken by means of GPC and subjected to structural analysis by carrying out ¹H-NMR, ¹³C-NMR, and ⁹Si-NMR. These analyses showed that the product comprised a diorganopolysiloxane represented by the following average formula:

X-CH₂CH₂(CH₃)₂ SiO[(CH₃)₂ SiO]₉₇Si(CH₃)₂CH₂CH₂-X

{where X is an organopolysiloxane residue represented by the following average unit formula:

[Y(CH₃)₂ SiO_{1/2}]_{0.8} [(CH₃)₃ SiO_{1/2}]_{0.8}(SiO_{4/2})_{1.0}

(where Y consists of single bonds and 3-glycidoxypropyl groups; one Y in one molecule is a single bond, and the remaining Ys are 3-glycidoxypropyl groups)}.

### [Application Example 1]

A curable silicone composition was prepared by mixing the following components: 14.3 parts by weight of the diorganopolysiloxane obtained in Practical Example 1; 4.2 parts by weight of the organotrisiloxane of the following formula: 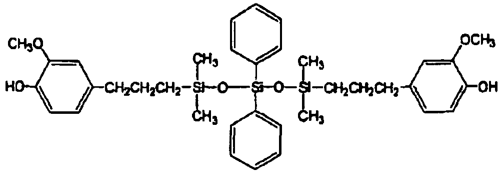 (viscosity: 2,600 mPa·s; phenolic hydroxyl group equivalent: 330); 1.0 part by weight of a mixture of bisphenol-F epoxy resin and a bisphenol-A epoxy resin of a 35 wt.% encapsulated amine catalyst (HX-3941HP; the product of Asahi Kasei Co., Ltd.); 63 parts by weight of an spherical alumina powder (average gain size: 8.6 µm); 17 parts by weight of an irregular alumina powder (an average grain size: 3 µm); and 0.5 parts by weight of an octadecyltrimethoxysilane. The obtained composition was measured with regard to viscosity, composite modulus of elasticity, and thermal resistance by methods described below. The results of measurement are shown in Table 1.

### [Viscosity]

Viscosity of the curable silicone composition at 25°C was determined by using an E-type viscometer (the product of TOKIMEC Co., Ltd., Digital Viscometer DV-U-E, Type II; 2. 5 rpm).

### [Composite Modulus of Elasticity]

A curable silicone composition was defoamed at 70 mmHg, poured into a mold having a cavity with the following dimensions: length 50 mm x width 10 mm x depth 2 mm, subjected to compression curing for 60 min. under conditions of 130°C and 2.5 MPa, and then to secondary heat treatment for 3 hours in an oven at 150°C, whereby a cured specimen was produced. This specimen was used for determining flexibility of the cured body by measuring a composite modulus of elasticity at 25°C with the use of the ARES rheometer (instrument for measuring viscoelasticity, the product of Rheometric Scientific Co., Inc., Model RDA700). Measurement was carried out at 1 Hz frequency and 0.5% twist.

### [Coefficient of Thermal Conductivity]

A spacer placed between upper and lower half-molds had dimensions such that a curable silicone composition sandwiched between the upper and lower half-molds formed a 3 mm-thick layer. The layer of the curable silicone composition was subjected to compression molding for 15 min. at 150°C, then taken off and heated for 45 min. at 150°C. The coefficient of thermal conductivity of the molded body was measured with the use of a thermal conductivity meter QTM-500 of Kyoto Electronics Manufacturing Co., Ltd.

### [Application Example 2]

A curable silicone composition was prepared by mixing the following components: 14.3 parts by weight of the diorganopolysiloxane obtained in Comparative Example 1; 4.2 parts by weight of the organotrisiloxane of the following formula: 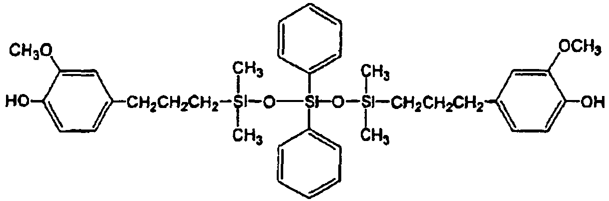 (viscosity: 2,600 mPa·s; phenolic hydroxyl group equivalent: 330); 1.0 part by weight of a mixture of bisphenol-F epoxy resin and a bisphenol-A epoxy resin of a 35 wt.% encapsulated amine catalyst (HX-3941HP; the product of Asahi Kasei Co., Ltd.); 63 parts by weight of a spherical alumina powder (average grain size: 8.6 µm); 17 parts by weight of an irregular alumina powder (an average grain size: 3 µm); and 0.5 parts by weight of an octadecyltrimethoxysilane. The obtained composition was measured with regard to viscosity, composite modulus of elasticity, and thermal resistance by methods described below. The results of measurement are shown in Table 1.

**[Table 1]**

| Items | Example | Application Example 1 | Application Example 2 |
|---|---|---|---|
| Property of the curable silicone composition | | | |
| | Viscosity (mPa·s) | 310 | 420 |

| Properties of the cured body | | | |
|---|---|---|---|
| | Composite modulus of elasticity (MPa) | 27 | 97 |
| | Coefficient of thermal conductivity | 1.80 | 1.10 |

### Industrial Applicability

The diorganopolysiloxane of the present invention is a novel compound that has on a molecular terminal an organopolysiloxane residue having an alkyl group with seven or more carbon atoms. Since this compound is characterized by low viscosity, it is well compatible and miscible with various organic resin compositions and miscible with various fillers. When the organopolysiloxane residue has on its molecular epoxy-containing alkyl groups and/or alkoxysilylalkyl groups, the diorganoplysiloxane can be used as an adhesion-accelerating agent of the curable organopolysiloxane composition.

## Claims

1. A diorganopolysiloxane represented by the following general formula:
X-R²-(R¹₂SiO)ₙR¹₂Si-R²-X
{where R¹ designates a monovalent hydrocarbon group that has six or fewer carbon atoms and is free of aliphatic unsaturated bonds; R² designates an alkylene group; and X is an organopolysiloxane residue represented by the following average unit formula:
(YR¹₂SiO_{1/2})ₐ(SiO_{4/2})_{b}
(where R¹ is the same as defined above; Y is a single bond, a hydrogen atom, a group represented by aforementioned R¹, an epoxy-containing alkyl group, an alkoxysilylalkyl group, or an alkyl group with seven or more carbon atoms; however, in one molecule, at least one Y is a single bond, and at least one Y is an alkyl group with seven or more carbon atoms; "a" is a positive number; "b" is a positive number; and "a/b" is a number in the range of 0.2 to 4.0), the aforementioned group represented by R¹ or an alkenyl group; however, at least one X is the aforementioned organopolysiloxane residue; and "n" is an integer in the range of 1 to 1,000}.

2. The diorganopolysiloxane of Claim 1, wherein the aforementioned alkyl group with seven or more carbon atoms, which is designated by Y, is an alkyl group with 7 to 18 carbon atoms.

3. The diorganopolysiloxane of Claim 1, wherein the aforementioned alkyl group with seven or more carbon groups, which is designated by Y, is heptyl group, octyl group, nonyl group, decyl group, undecyl group, dodecyl group, heptadecyl group, or octadecyl group.

4. The diorganopolysiloxane of Claim 1, where in one molecule at least one Y is an epoxy-containing alkyl group.

5. The diorganopolysiloxane of Claim 4, wherein the epoxy-containing alkyl group is a glycidoxyalkyl group, an epoxycyclohexylalkyl group, or an oxiranylalkyl group.

6. The diorganopolysiloxane of Claim 1, where in one molecule at least one Y is an alkoxysilylalkyl group.

7. A method of manufacturing the diorganopolysiloxane of Claim 1 by subjecting at least the following components to a hydrosilylation reaction:
(A) an organopolysiloxane represented by the following average unit formula:
(R³R¹SiO_{1/2})ₐ(SiO_{4/2})_{b}
(where R¹ designates a monovalent hydrocarbon group that has six or fewer carbon atoms and is free of aliphatic unsaturated bonds; R³ designates a hydrogen atom or a group represented by the aforementioned R¹; however, in one molecule at least two R³s are hydrogen atoms; "a" is a positive number; "b" is a positive number; and "a/b" is a number in the range of 0.2 to 4.0);
(B) a diorganopolysiloxane represented by the following general formula:
R⁴-(R¹₂SiO)ₙR¹₂Si-R⁴
(where R¹ is the same as defined above; R⁴ is a group designated by aforementioned R¹ or an alkenyl group; however, at least one R⁴ is an alkenyl group; and "n" is an integer in the range of 1 to 1,000); and
(C) an alkene having seven or more carbon atoms,
the reaction being carried out in the presence of (D) a platinum-type catalyst.

8. The method of Claim 7, wherein component (C) is an alkene with 7 to 18 carbon atoms.

9. The method of Claim 7, wherein component (C) is heptene, octene, nonene, decene, undecene, dodecene, heptadecene, or octadecene.

10. The method of Claim 7, further comprising a step causing a hydrosilylation reaction with (E) an epoxy-containing alkene.

11. The method of Claim 10, wherein component (E) is a glycidoxyalkene, an epoxycyctohexylalkene, or an oxiranylalkene.

12. The method of Claim 7, further comprising a step causing a hydrosilylation reaction with (F) an alkoxysilylalkene.

13. The method of Claim 12, wherein component (F) is trimethoxyvinylsilane, triethoxyvinylsilane, methyldimethoxyvinylsilane, allyltrimethoxysilane, allylmethyldiethoxysilane, or methoxydiphenylvinylsilane.

## Patentansprüche

1. Diorganopolysiloxan, das durch die folgende allgemeine Formel dargestellt wird:
X-R²-(R¹₂SiO)ₙR¹₂Si-R²-X
{wobei R¹ eine einwertige Kohlenwasserstoffgruppe bezeichnet, die sechs oder weniger Kohlenstoffatome aufweist und frei von aliphatischen ungesättigten Bindungen ist; R² eine Alkylengruppe bezeichnet und X ein Organopolysiloxan-Rest ist, der durch die folgende durchschnittliche Einheitsformel dargestellt wird:
(YR¹₂SiO_{1/2})ₐ(SiO_{4/2})_{b}
(wobei R¹ genauso wie oben definiert ist; Y eine Einfachbindung, ein Wasserstoffatom, eine Gruppe, die durch das oben erwähnte R¹ dargestellt wird, eine epoxyhaltige Alkylgruppe, eine Alkoxysilylalkylgruppe oder eine Alkylgruppe mit sieben oder mehr Kohlenstoffatomen ist; in einem Molekül ist jedoch mindestens ein Y eine Einfachbindung und mindestens ein Y ist eine Alkylgruppe mit sieben oder mehr Kohlenstoffatomen; "a" eine positive Zahl ist; "b" eine positive Zahl ist und "a/b" eine Zahl im Bereich von 0,2 bis 4,0 ist), die oben erwähnte Gruppe durch R¹ oder eine Alkenylgruppe dargestellt wird; mindestens ein X ist jedoch der oben erwähnte Organopolysiloxan-Rest; und "n" eine ganze Zahl im Bereich von 1 bis 1000 ist}.

2. Diorganopolysiloxan nach Anspruch 1, wobei die oben erwähnte Alkylgruppe mit sieben oder mehr Kohlenstoffatomen, die durch Y bezeichnet ist, eine Alkylgruppe mit 7 bis 18 Kohlenstoffatomen ist.

3. Diorganopolysiloxan nach Anspruch 1, wobei die oben erwähnte Alkylgruppe mit sieben oder mehr Kohlenstoffgruppen, die durch Y bezeichnet ist, eine Heptylgruppe, Octylgruppe, Nonylgruppe, Decylgruppe, Undecylgruppe, Dodecylgruppe, Heptadecylgruppe oder Octadecylgruppe ist.

4. Diorganopolysiloxan nach Anspruch 1, wobei in einem Molekül mindestens ein Y eine epoxyhaltige Alkylgruppe ist.

5. Diorganopolysiloxan nach Anspruch 4, wobei die epoxyhaltige Alkylgruppe eine Glycidoxyalkylgruppe, eine Epoxycyclohexylalkylgruppe oder eine Oxiranylalkylgruppe ist.

6. Diorganopolysiloxan nach Anspruch 1, wobei in einem Molekül mindestens ein Y eine Alkoxysilylalkylgruppe ist.

7. Verfahren zur Herstellung des Diorganopolysiloxans nach Anspruch 1 durch Unterziehen mindestens der folgenden Komponenten einer Hydrosilylierungsreaktion:
(A) ein Organopolysiloxan, das durch die folgende durchschnittliche Einheitsformel dargestellt wird:
(R³ R¹₂SiO_{1/2})ₐ(SiO_{4/2})_{b}
(wobei R¹ eine einwertige Kohlenwasserstoffgruppe bezeichnet, die sechs oder weniger Kohlenstoffatome aufweist und frei von aliphatischen ungesättigten Bindungen ist; R³ ein Wasserstoffatom oder eine Gruppe, die durch das oben erwähnte R¹ dargestellt wird, bezeichnet; in einem Molekül sind jedoch mindestens zwei R³ Wasserstoffatome; "a" eine positive Zahl ist; "b" eine positive Zahl ist und "a/b" eine Zahl im Bereich von 0,2 bis 4,0 ist);
(B) ein Diorganopolysiloxan, das durch die folgende allgemeine Formel dargestellt wird:
R⁴-(R¹₂SiO)ₙR¹₂Si-R⁴
(wobei R¹ genauso wie oben definiert ist; R⁴ eine Gruppe, die durch das oben erwähnte R¹ bezeichnet ist, oder eine Alkenylgruppe ist; mindestens ein R⁴ ist jedoch eine Alkenylgruppe; und "n" eine ganze Zahl im Bereich von 1 bis 1000 ist); und
(C) ein Alken mit sieben oder mehr Kohlenstoffatomen,
wobei die Reaktion in Gegenwart von (D), einem Platinkatalysator, durchgeführt wird.

8. Verfahren nach Anspruch 7, wobei die Komponente (C) ein Alken mit 7 bis 18 Kohlenstoffatomen ist.

9. Verfahren nach Anspruch 7, wobei die Komponente (C) Hepten, Octen, Nonen, Decen, Undecen, Dodecen, Heptadecen oder Octadecen ist.

10. Verfahren nach Anspruch 7, das weiterhin einen Schritt umfasst, der eine Hydrosilylierungsreaktion mit (E), einem epoxyhaltigen Alken, bewirkt.

11. Verfahren nach Anspruch 10, wobei die Komponente (E) ein Glycidoxyalken, ein Epoxycyclohexylalken oder ein Oxiranylalken ist.

12. Verfahren nach Anspruch 7, das weiterhin einen Schritt umfasst, der eine Hydrosilylierungsreaktion mit (F), einem Alkoxysilylalken, bewirkt.

13. Verfahren nach Anspruch 12, wobei die Komponente (F) Trimethoxyvinylsilan, Triethoxyvinylsilan, Methyldimethoxyvinylsilan, Allyltrimethoxysilan, Allylmethyldiethoxysilan oder Methoxydiphenylvinylsilan ist.

## Revendications

1. Diorganopolysiloxane représenté par la formule générale suivante :
X-R²-(R¹₂SiO)ₙ R¹₂Si-R²-X
{dans laquelle R¹ désigne un groupe hydrocarboné monovalent qui a un maximum de six atomes carbone et est exempt de liaisons aliphatiques insaturées ; R² désigne un groupe alkylène ; et X est un résidu d'organopolysiloxane représenté par la formule unitaire moyenne :
(YR¹₂SiO_{1/2})ₐ(SiO_{4/2})_{b}
(dans laquelle R¹ est le même que dans la définition précédente ; Y est une liaison simple, un atome d'hydrogène, un groupe représenté par le R¹ susmentionné, un groupe alkyl à teneur en époxy, un groupe alkoxysilylalkyle ou un groupe alkyle ayant un minimum de sept atomes carbone ; toutefois, dans une molécule, au moins un Y est une liaison simple, et au moins un Y est un groupe alkyle ayant un minimum de sept atomes carbone ; « a » est un nombre positif ; « b » est un nombre positif ; et « a/b » est un nombre compris entre 0,2 et 4,0), le groupe susmentionné représenté par R¹ ou un groupe alcényle ; toutefois, au moins un X est le résidu d'organopolysiloxane susmentionné ; et « n » est un entier compris entre 1 et 1 000}.

2. Diorganopolysiloxane selon la revendication 1, dans lequel le groupe alkyle susmentionné ayant un minimum de sept atomes carbone, qui est désigné par Y, est un groupe alkyle ayant de 7 à 18 atomes carbone.

3. Diorganopolysiloxane selon la revendication 1, dans lequel le groupe alkyle susmentionné ayant un minimum de sept atomes carbone, qui est désigné par Y, est un groupe heptyle, un groupe octyle, un groupe nonyle, un groupe décyle, un groupe undécyle, un groupe dodécyle, un groupe heptadécyle ou un groupe octadécyle.

4. Diorganopolysiloxane selon la revendication 1, dans lequel, dans une molécule, au moins un Y est un groupe alkyle à teneur en époxy.

5. Diorganopolysiloxane selon la revendication 4, dans lequel le groupe alkyle à teneur en époxy est un groupe glycidoxyalkyle, un groupe époxycyclohexylalkyle ou un groupe oxyranylalkyle.

6. Diorganopolysiloxane selon la revendication 1, dans lequel, dans une molécule, au moins un Y est un groupe alkoxysilylalkyle.

7. Procédé de fabrication du diorganopolysiloxane selon la revendication 1 consistant à soumettre au moins les composants suivants à une réaction d'hydrosilation :
(A) un organopolysiloxane représenté par la formule unitaire moyenne :
(R³ R¹₂SiO_{1/2})ₐ(SiO_{4/2})_{b}
(dans laquelle R¹ désigne un groupe hydrocarboné monovalent qui a un maximum de six atomes carbone et est exempt de liaisons aliphatiques insaturées ; R³ désigne un atome d'hydrogène ou un groupe représenté par le R¹ susmentionné ; toutefois, dans une molécule, au moins deux R³ sont des atomes hydrogène ; « a » est un nombre positif ; « b » est un nombre positif ; et « a/b » est un nombre compris entre 0,2 et 4,0) ;
(B) un diorganopolysiloxane représenté par la formule générale suivante :
R⁴-(R¹₂SiO)ₙR¹₂Si-R⁴
(dans laquelle R¹ est identique à la définition précédente ; R⁴ est un groupe désigné par le R¹ susmentionné ou un groupe alcényle ; toutefois, au moins un R⁴ est un groupe alcényle ; et « n » est un entier compris entre 1 et 1 000) ; et
(C) un alcène ayant un minimum de sept atomes carbone,
la réaction étant réalisée en présence de (D) un catalyseur de type platine.

8. Procédé selon la revendication 7, dans lequel un composant (C) est un groupe alcène ayant de 7 à 18 atomes de carbone.

9. Procédé selon la revendication 7, dans lequel le composant (C) est heptène, octène, nonène, décène, undécéne, dodécène, heptadécène ou octadécène.

10. Procédé selon la revendication 7, comprenant en outre une étape consistant à causer une réaction d'hydrosilation avec un alcène à teneur en époxy.

11. Procédé selon la revendication 10, dans lequel le composant (E) est un glycidoxyalcène, un époxycyclohexylalcène ou un oxyranylalcène.

12. Procédé selon la revendication 7, comprenant en outre une étape consistant à causer une réaction d'hydrosilation avec (F) un alkoxysilylalcène.

13. Procédé selon la revendication 12, dans lequel le composant (F) est triméthoxyvinylsilane, triéthoxyvinylsilane, méthyldiméthoxyvinylsilane, allyltriméthoxysilane, allylméthyldiéthoxysilane ou méthoxydiphénylvinylsilane.
